# EUROPEAN PATENT SPECIFICATION

(11) **EP 1 445 181 B1**
(45) Date of publication and mention of the grant of the patent: **10.09.2008**
(21) Application number: 04100430.0
(22) Date of filing: 05.02.2004
(51) Int. Cl.: B62J 1/12, B62K 19/46

(54) **Structure of seat of motorcycle**
Struktur eines Motorradsitzes
Structure de selle de motocyclette

(30) Priority: 07.02.2003 JP 2003031718
(43) Date of publication of application: 11.08.2004
(73) Proprietor: HONDA MOTOR CO., LTD., Tokyo (JP)
(72) Inventor: Tanaka, Tetsuharu, Wako-shi Saitama (JP); Yoshida, Takeshi, Wako-shi Saitama (JP); Nakamura, Toshinori, wako-shi Saitama (JP)
(74) Representative: Poulin, Gérard

(56) References cited:
- EP-A- 1 092 616
- JP-A- 10 203 443
- US-A1- 2001 022 462

## Description

### Technical Field of the Invention

The present invention relates to a structure of a seat of a motorcycle, in which a foam molding material is used for a bottom plate of the seat.

### Prior Art

As structures of a seat of a motorcycle, a structure having a plurality of seat locking mechanisms (refer to, for example, Patent Document 1) and a structure in which a foam molding material is used for a bottom plate of a seat (refer to, for example, Patent Document 2) are known.

### Patent Document 1

Japanese Unexamined Patent Publication No. 2001-239970 (page 3, FIG. 2)

### Patent Document 2

Japanese Unexamined Patent Publication No. 2001-114147 (pages 3 to 5, FIGS. 2, 3, and 13)

FIG. 2 of Patent Document 1 will be described with reference to FIG. 26. New reference numerals are designated.

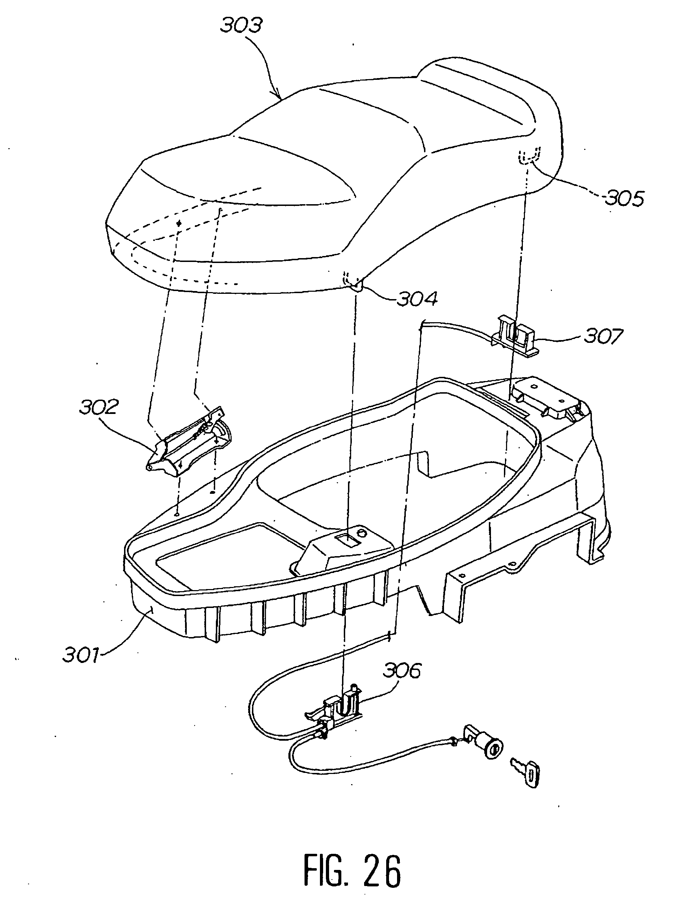

FIG. 26 is an exploded perspective view (Prior Art 1) showing a conventional structure of a motorcycle, and illustrates a seat opening/closing structure in which a seat 303 is attached so as to be opened/closed via a seat hinge 302 to a front part of a luggage box 301, a first U-shaped metal fitting 304 and a second U-shaped metal fitting 305 are attached to the under face of the seat 303, a first seat locking mechanism 306 is disposed on a side part of the luggage box 301 for receiving the first U-shaped metal fitting 304, and a second seat locking mechanism 307 is disposed in a rear part of the luggage box 301 for receiving the second U-shaped metal fitting 305.

FIGS. 2, 3, and 13 of Patent Document 2 will be described by referring to FIGS. 27, 28, and 29, respectively.

FIG. 27 is a cross section showing a conventional structure of a seat of a motorcycle (Prior Art 2) and illustrates a seat 314 in which a cushion material 312 is mounted on a bottom plate 311 and is covered with a surface material 313.

The bottom plate 311 has a sandwiching structure having an inner layer 311a as a foaming layer and external layers 311b and 311b as compact layers hardly including a foaming part. The bottom plate 311 is constructed by a front part 316 corresponding to a part on which the driver sits down, an intermediate part 317 provided so as to be inclined on the rear side of the front part 316, and a rear part 318 provided in correspondence with a part on which an occupant sits down, on the rear side of the intermediate part 317.

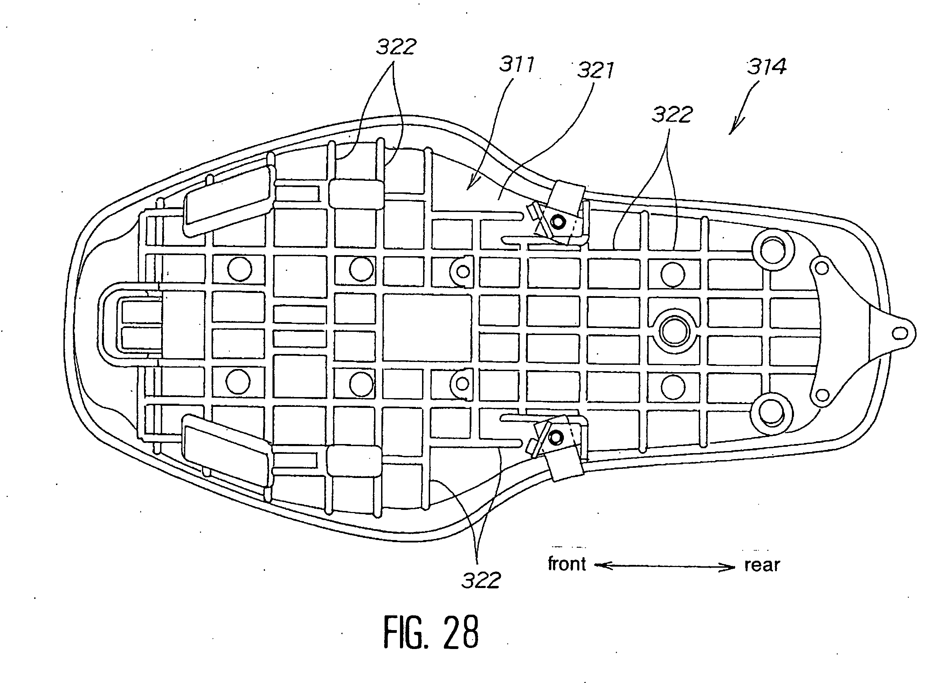

FIG. 28 is a bottom view of a conventional seat (Prior Art 2) and shows that a plurality of ribs 322 are formed in a lattice shape on an almost whole under face 321 of the seat 314.

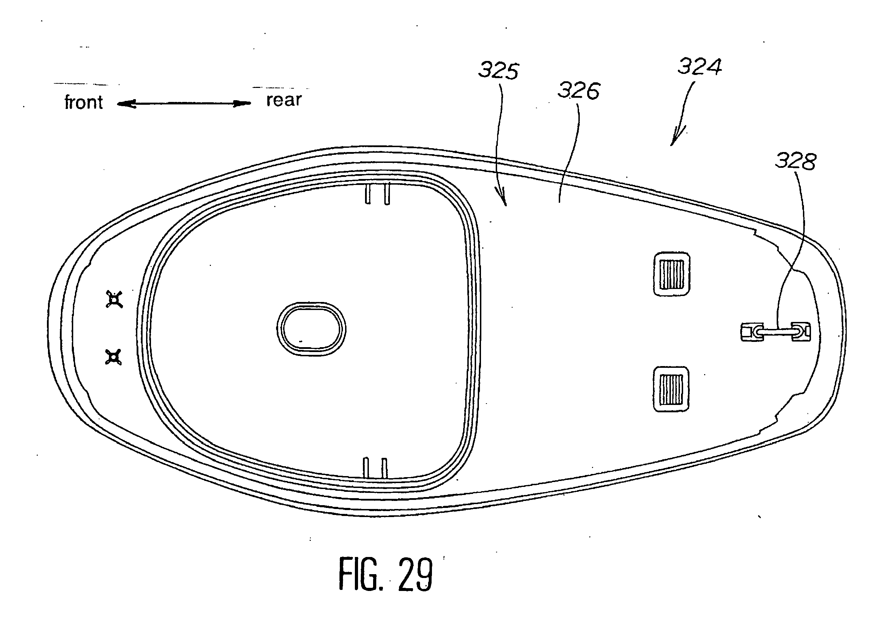

FIG. 29 is a bottom view showing another embodiment (Prior Art 2) of the conventional seat and shows that a bottom plate 325 of a seat 324 has a sandwich structure having a forming layer as an inner layer and the thickness of the bottom plate 325 is increased, thereby eliminating ribs for reinforcement from an under surface 326. 328 denotes a retaining member for retaining the seat 324 attached to the body side so as to be opened/closed to the body side.

### Problems to be solved by the Invention

In FIG. 26, to attach the seat 303 so as to be opened/closed to the luggage box 301, by using the first and second seat locking mechanisms 306 and 307, an effect of preventing the large seat 303 frombeing stolen is produced. However, if the number of the seat locking mechanisms can be reduced to one while displaying the anti-theft effect, the number of parts can be reduced and the cost can be decreased.

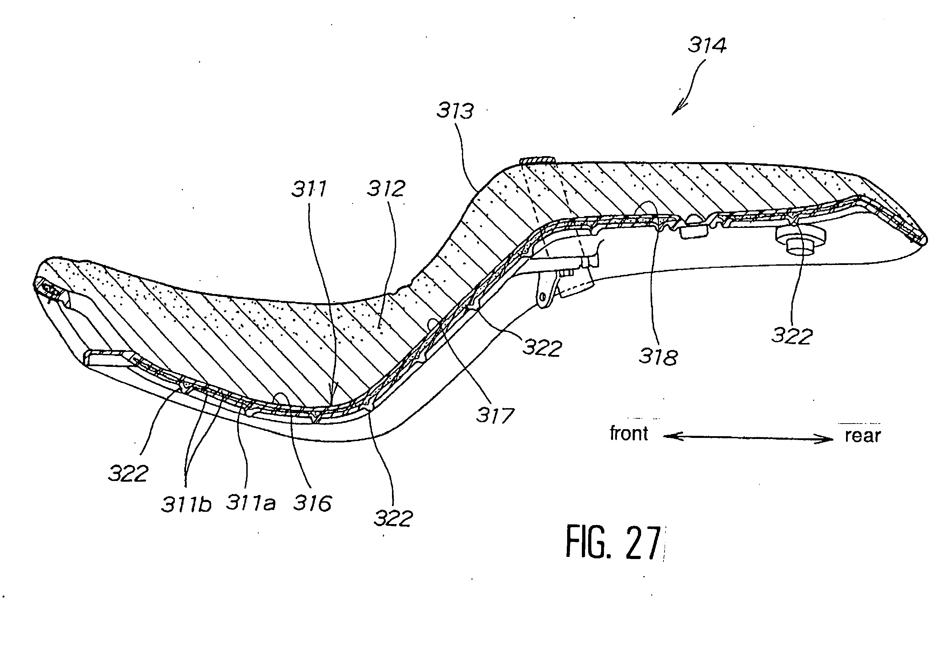

In FIGS. 27 and 28, the ribs 322 are formed on almost the whole under surface 321 to increase the rigidity of the whole seat 314. In FIG. 29, by increasing the thickness of the bottom plate 325, without providing the under surface 326 of the bottom plate 325 with ribs for reinforcement, the rigidity of the seat 324 is enhanced. Although the anti-theft effect of the seats 314 and 324 can be consequently increased, the weight and cost are increased.

Further, for example, if the rigidity of the bottom plates 311 and 325 of the seats 314 and 324 can be partially changed, the structure capable of displaying the anti-theft effect can be achieved while satisfying seat comfort.

An object of the invention is therefore to increase an anti-theft effect of a seat, reduce the cost and weight, and improve seat comfort by improving the structure of a seat of a motorcycle.

### Means for solving the Problems

To achieve the object, in claim 1, a motorcycle in which a foam molding material is used for a bottom plate of a tandem seat obtained by coupling a driver's seat and an occupant' s seat to each other in the longitudinal direction is characterized in that ribs on the bottom plate on the occupant's seat side are disposed more densely than ribs on the bottom plate on the driver's seat side.

Since the bottomplate is made of a foam molding material, light weight can be achieved. In addition, by disposing ribs on the occupant's seat side more densely than ribs on the driver's seat side, rigidity of the bottom plate on the occupant's seat side can be increased. Consequently, the occupant' s seat can be prevented frombeing forcefully opened, and the anti-theft effect can be increased.
Further, since the driver's seat has a smaller number of the ribs, seat comfort can be improved more, and increase in weight can be suppressed.

When the anti-theft effect of the occupant's seat increases, it is unnecessary to provide a conventional seat locking mechanism in the seat rear part. In the invention, one seat locking mechanism is sufficient, so that cost reduction can be realized.

Claim 2 is characterized in that a seat hinge for attaching the tandem seat so as to be opened/closed to a housing box disposed below the tandem seat is provided on one of right and left sides of the bottom plate, and a seat hook which comes into engagement with a seat catch provided on the housing box side is provided on the other side of the bottom plate.

Even when only one set of the seat hinge, the seat catch and the seat hook is disposed in an almost center portion in the overall length of the tandem seat, because of high rigidity of the occupant's seat, the rear part of the tandem seat can be prevented from being forcefully opened, and the anti-theft effect can be increased.

Claim 3 is characterized in that the bottom plate has, in its front part, a stopper for preventing the tandem seat from opening by coming into engagement with a recess provided in the housing box in a state where the tandem seat is closed.
By providing the stopper in the front part of the bottom plate, in addition to the rear part of the tandem seat, the anti-theft effect of the front part of the tandem seat can be increased.

### BRIEF DESCRIPTION OF THE DRAWINGS

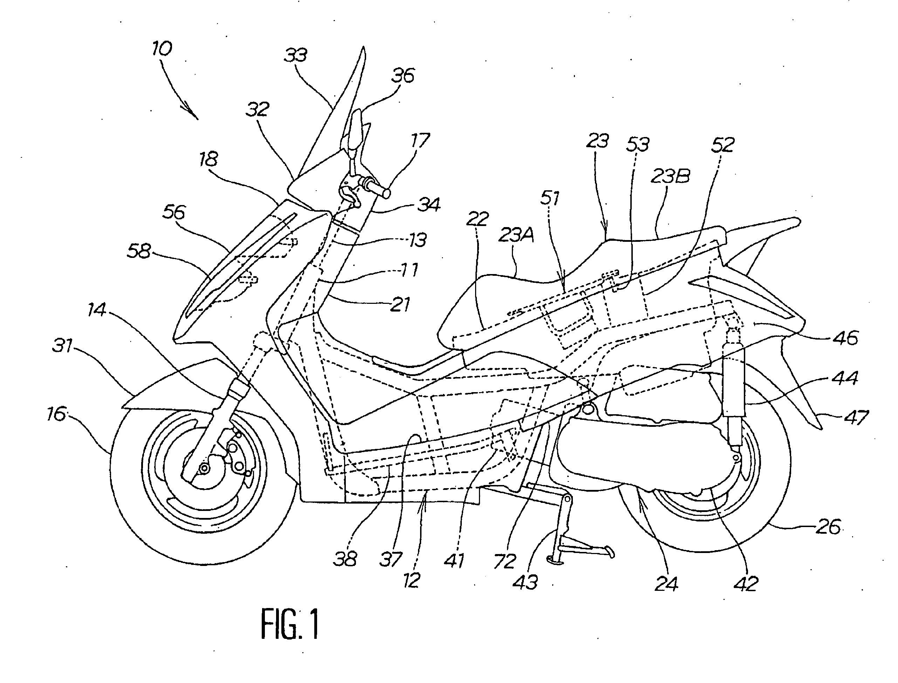

FIG. 1 is a side view of a motorcycle according to the invention.

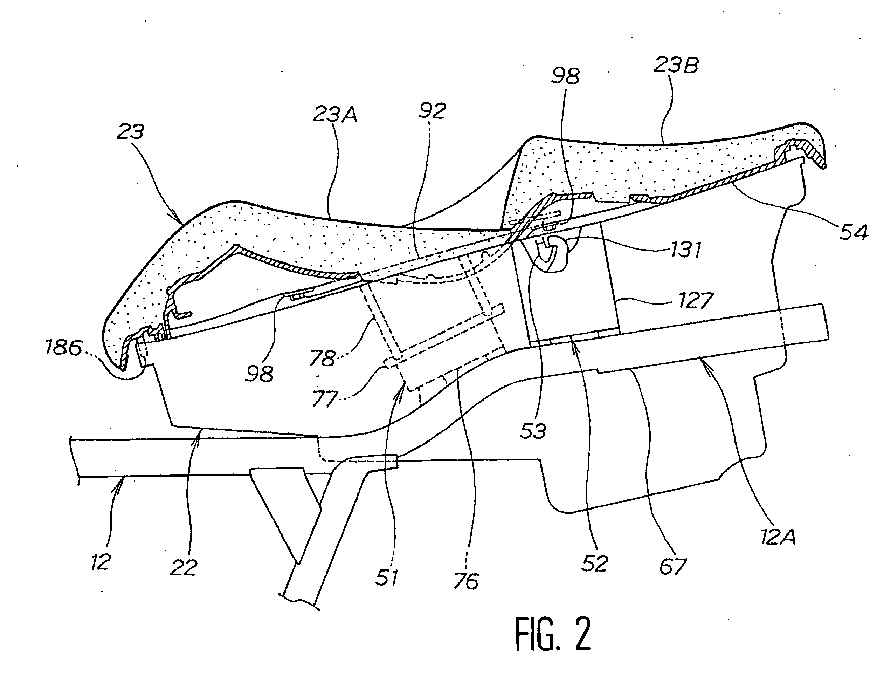

FIG. 2 is a side view of a main part showing a rear part of the motorcycle according to the invention.

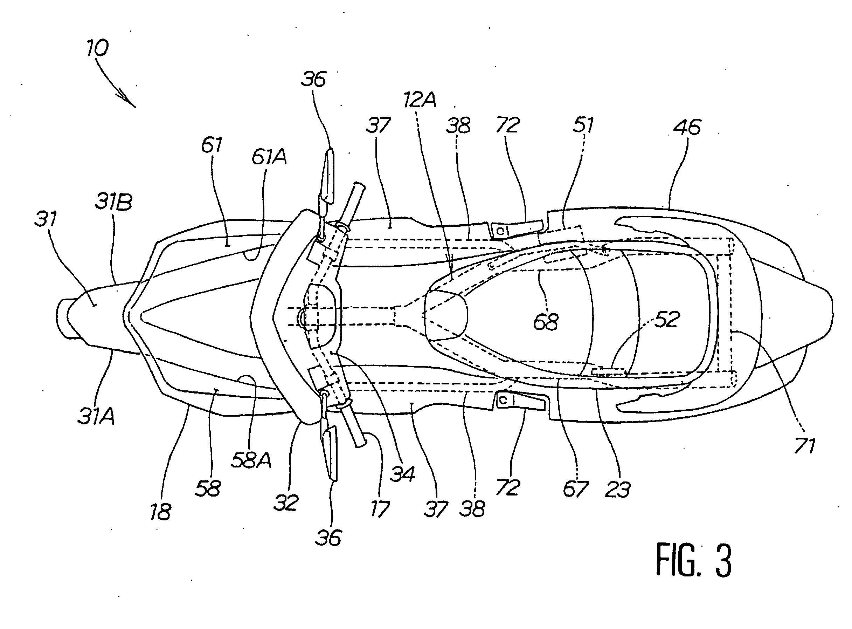

FIG. 3 is a plan view of the motorcycle according to the invention.

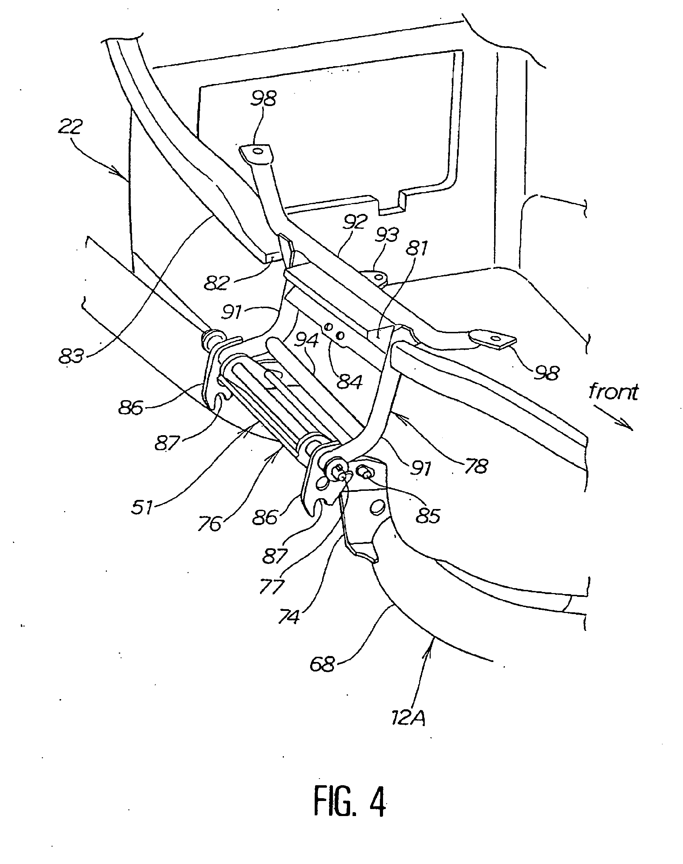

FIG. 4 is a perspective view showing a fixing state of a seat hinge according to the invention.

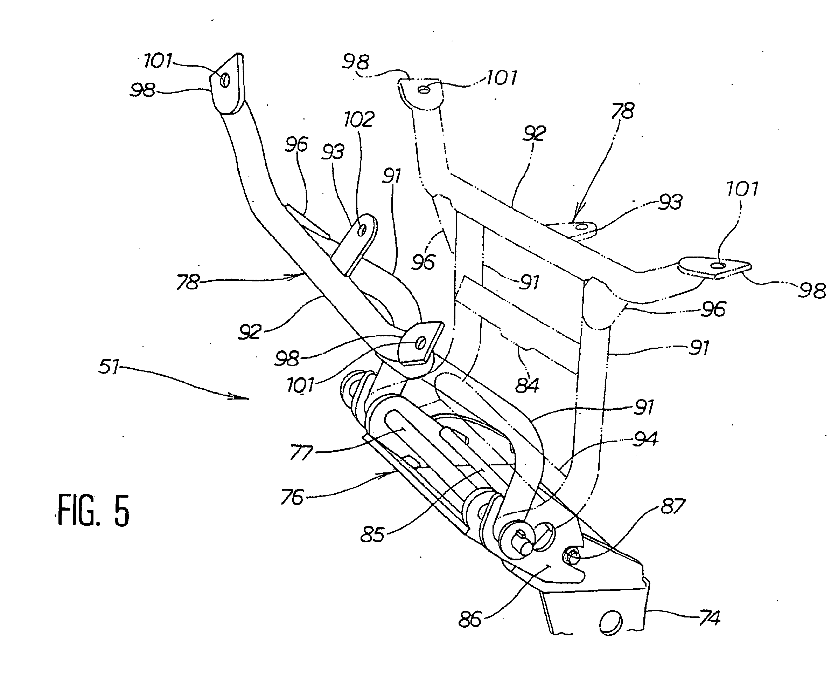

FIG. 5 is a perspective view of the seat hinge according to the invention.

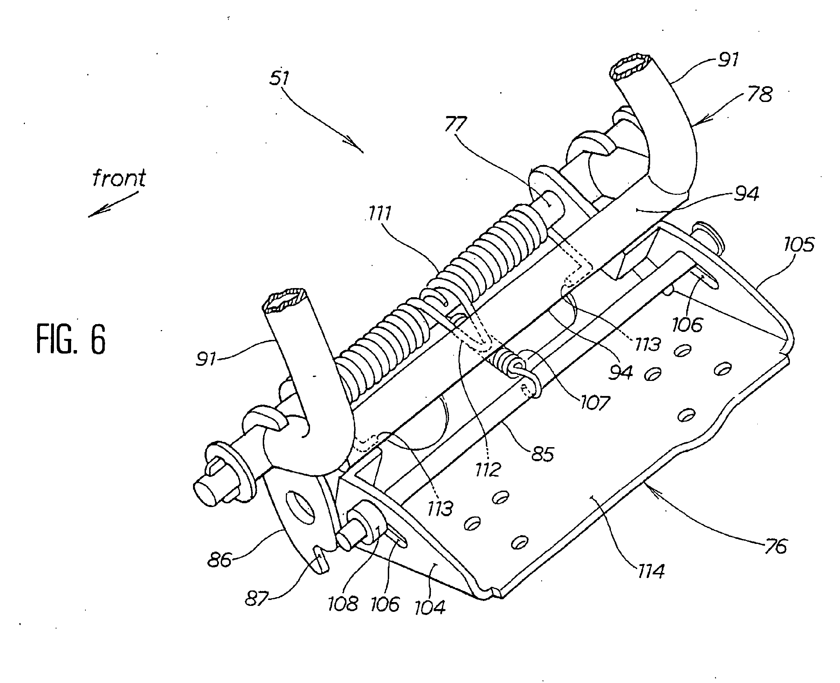

FIG. 6 is a main-part perspective view showing a main part of the seat hinge according to the invention.

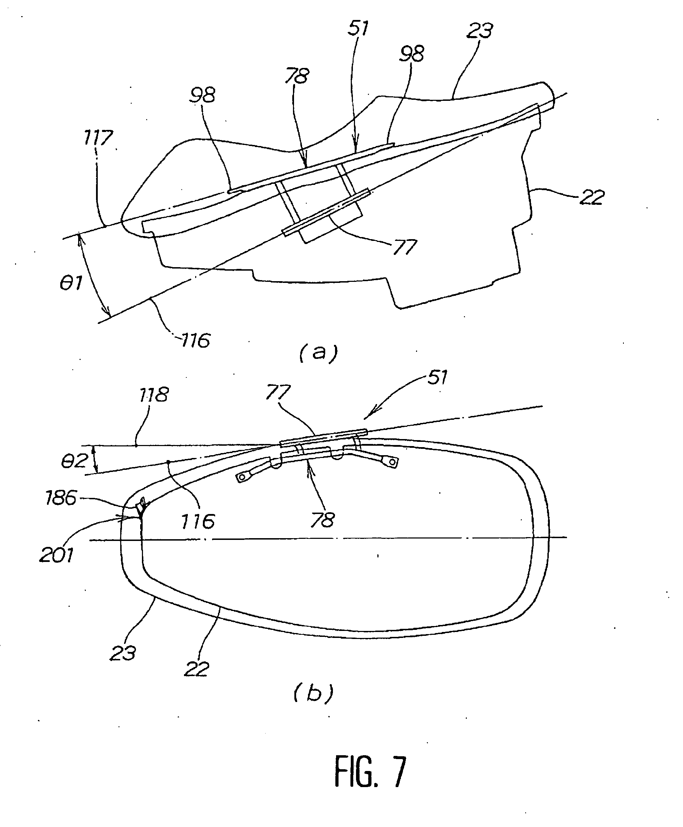

FIG. 7 is an explanatory diagram showing an inclination of a hinge shaft of the seat hinge according to the invention.

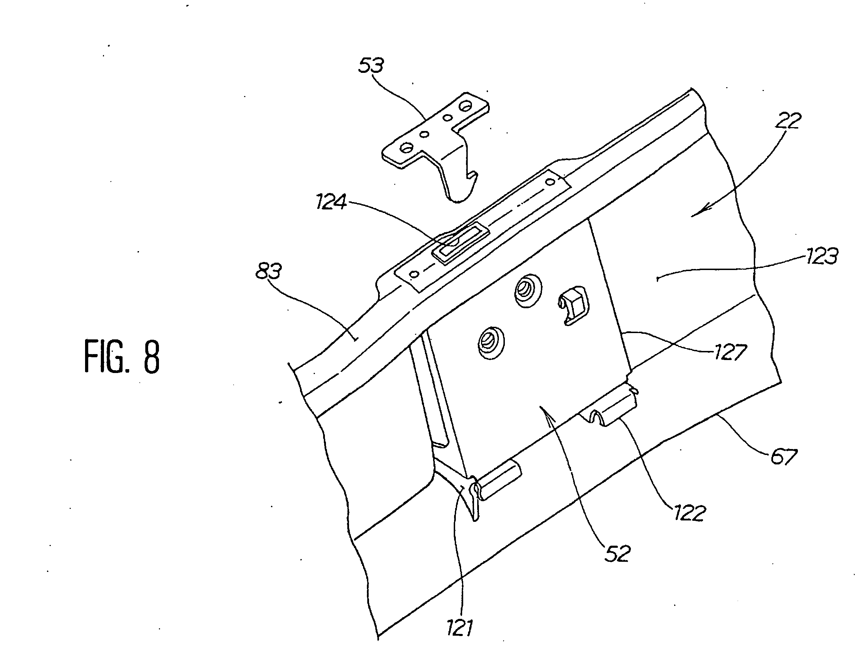

FIG. 8 is a perspective view showing a fixing state of a seat catch according to the invention.

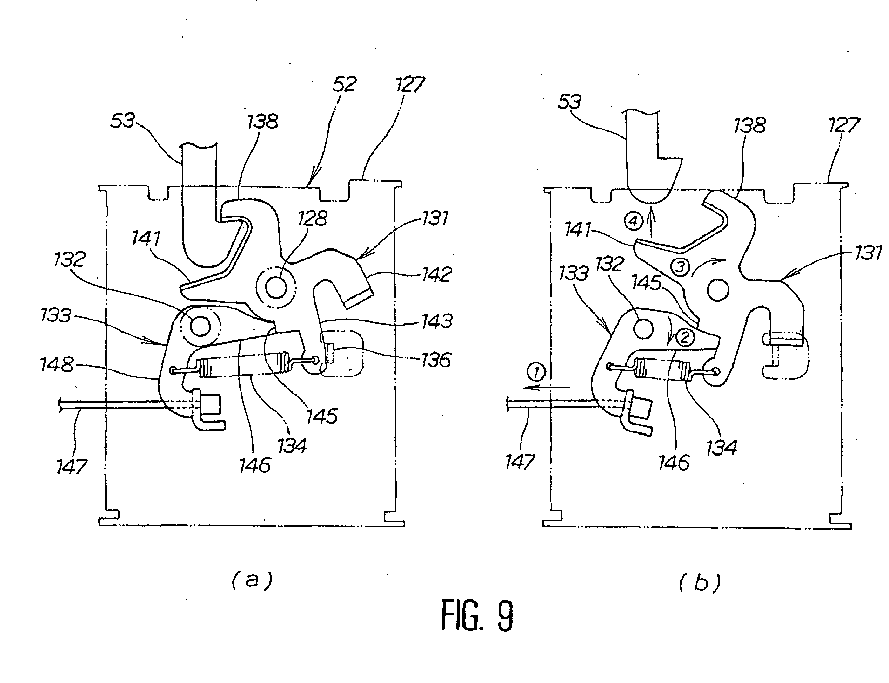

FIG. 9 is an explanatory diagram of the seat catch according to the invention.

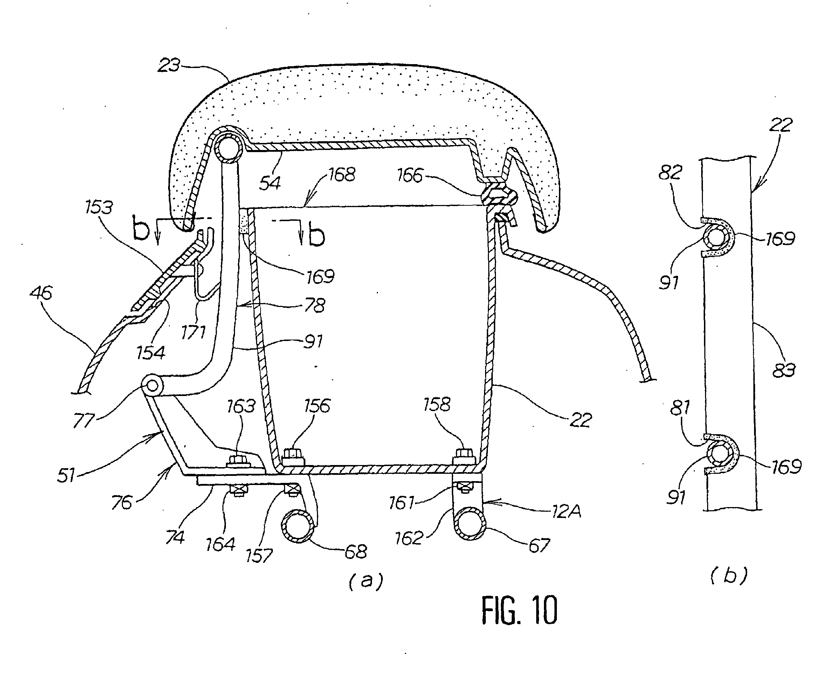

FIG. 10 is a cross section for explaining a hinge cover of the seat hinge according to the invention.

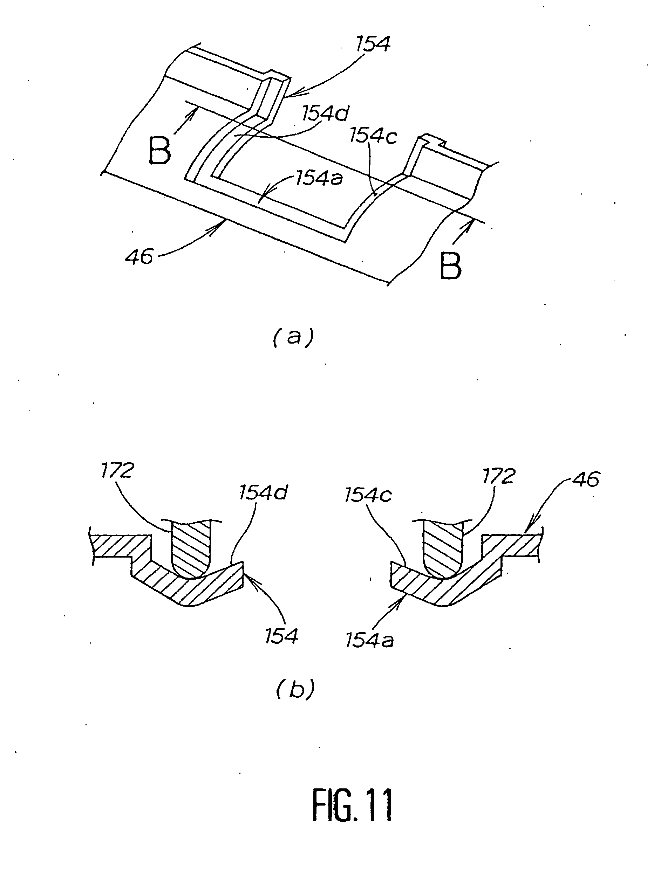

FIG. 11 is an explanatory diagram showing a notch in a body cover according to the invention.

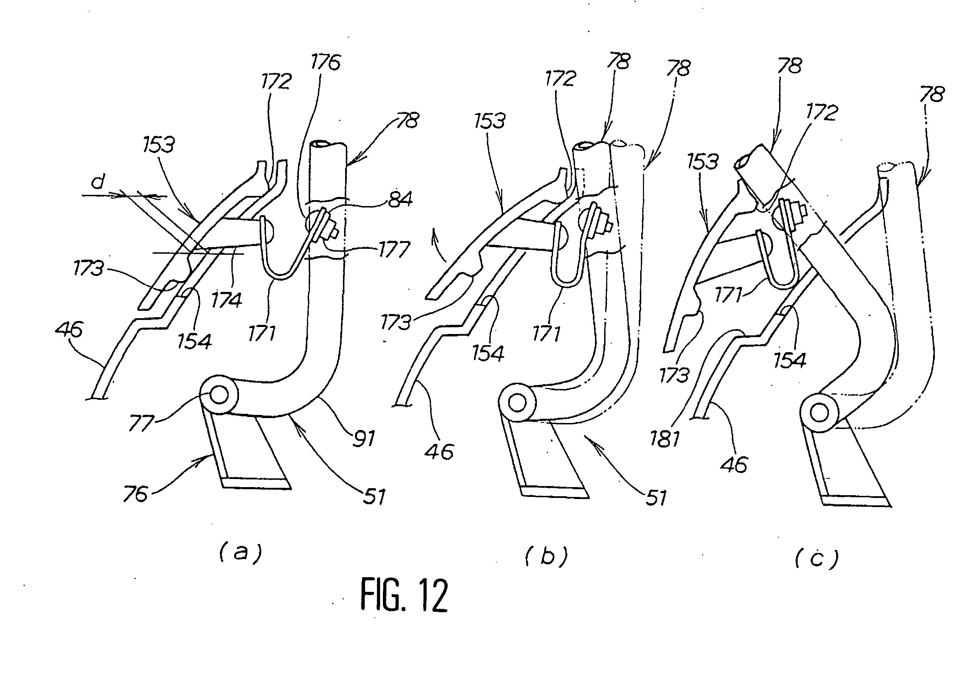

FIG. 12 is an action diagram for explaining an operation of opening the hinge cover according to the invention.

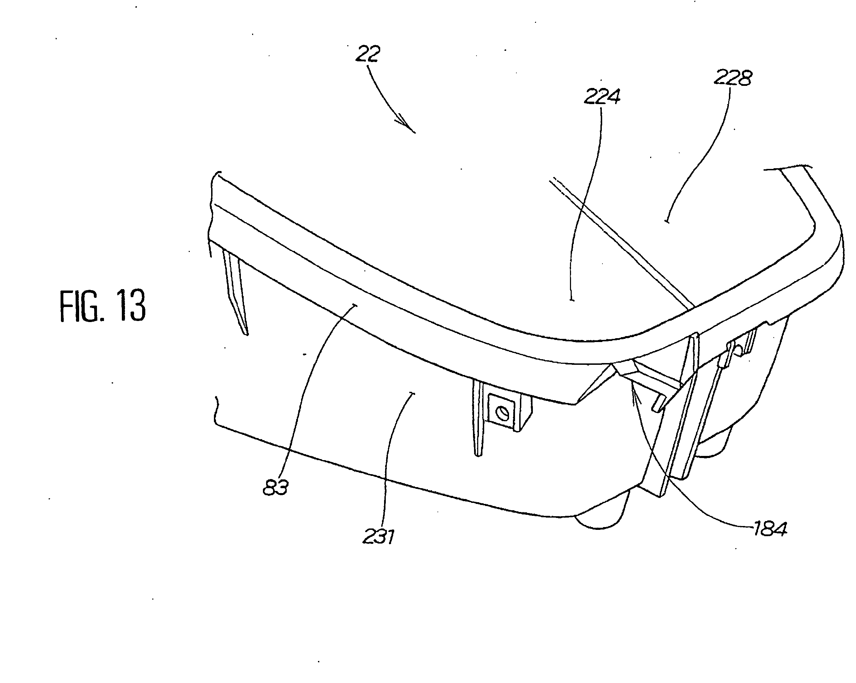

FIG. 13 is a perspective view of a luggage box according to the invention.

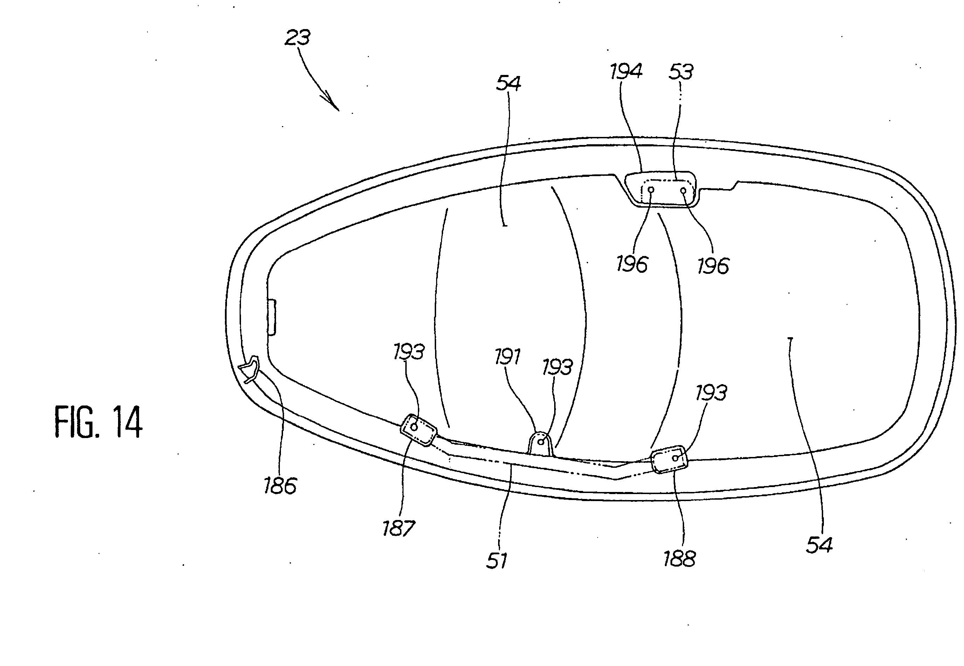

FIG. 14 is a bottom view showing a bottom face of the tandem seat according to the invention.

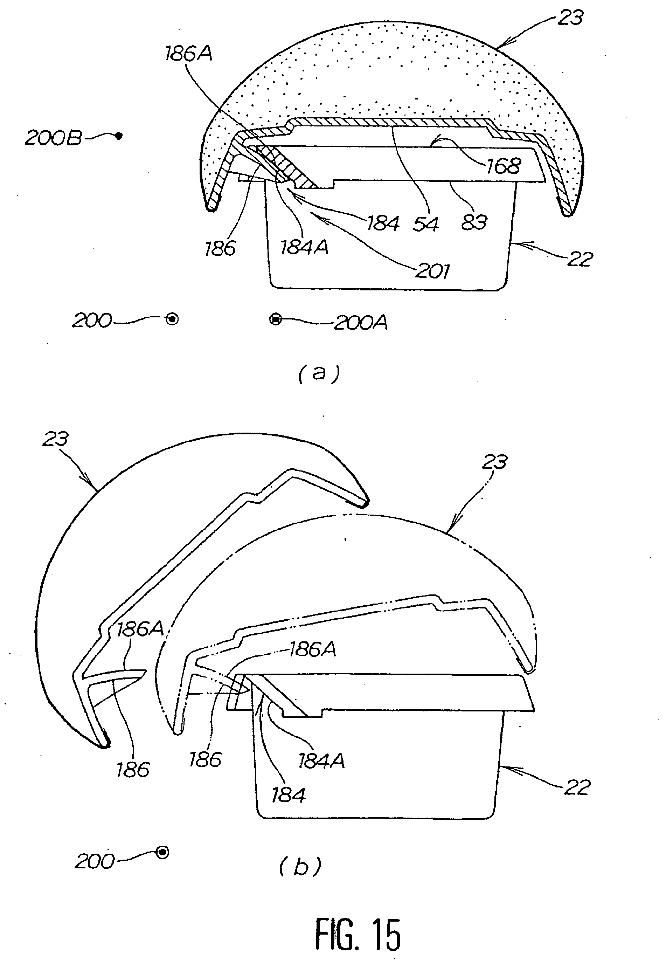

FIG. 15 is a cross section for explaining engagement between the luggage box and the tandem seat according to the invention.

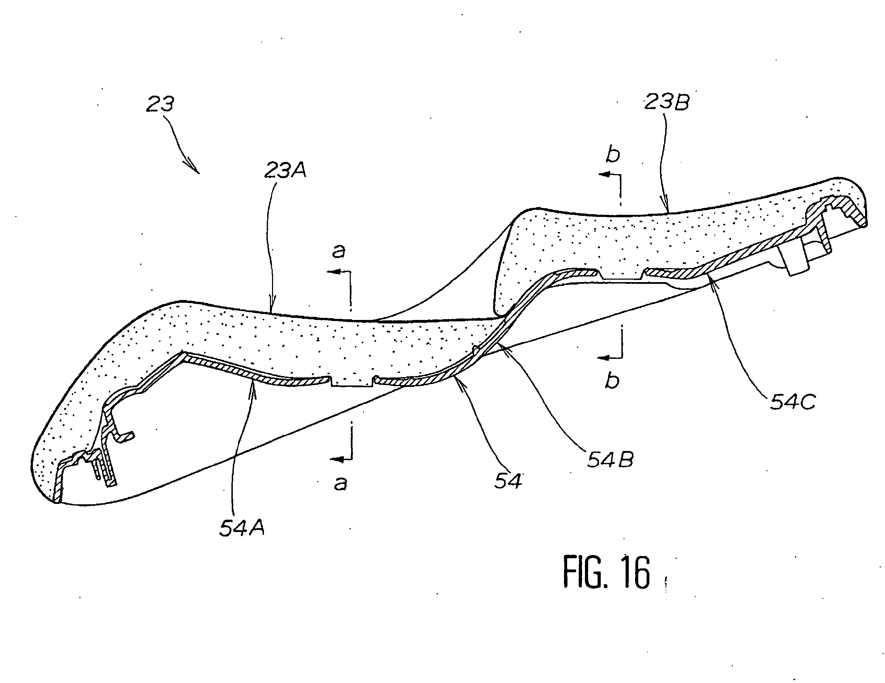

FIG. 16 is a cross section of the tandem seat according to the invention.

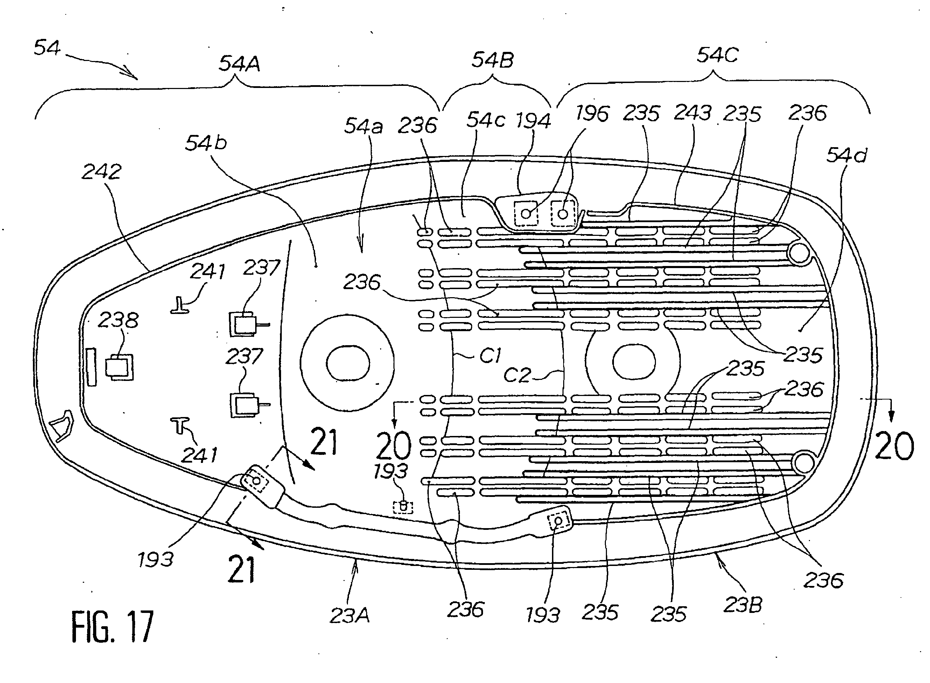

FIG. 17 is a bottom view of the tandem seat according to the invention.

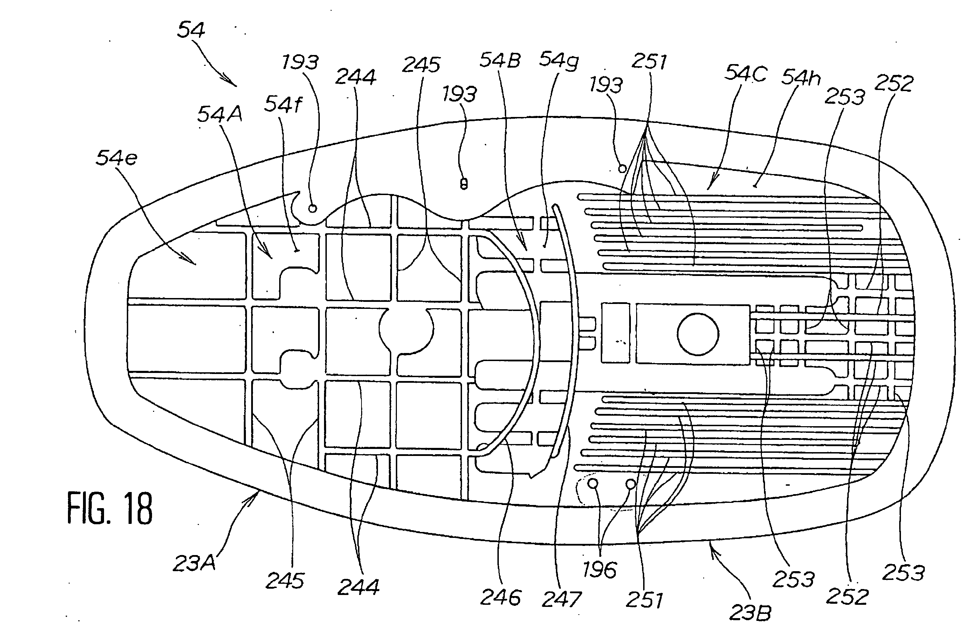

FIG. 18 is a plan view of a bottom plate according to the invention.

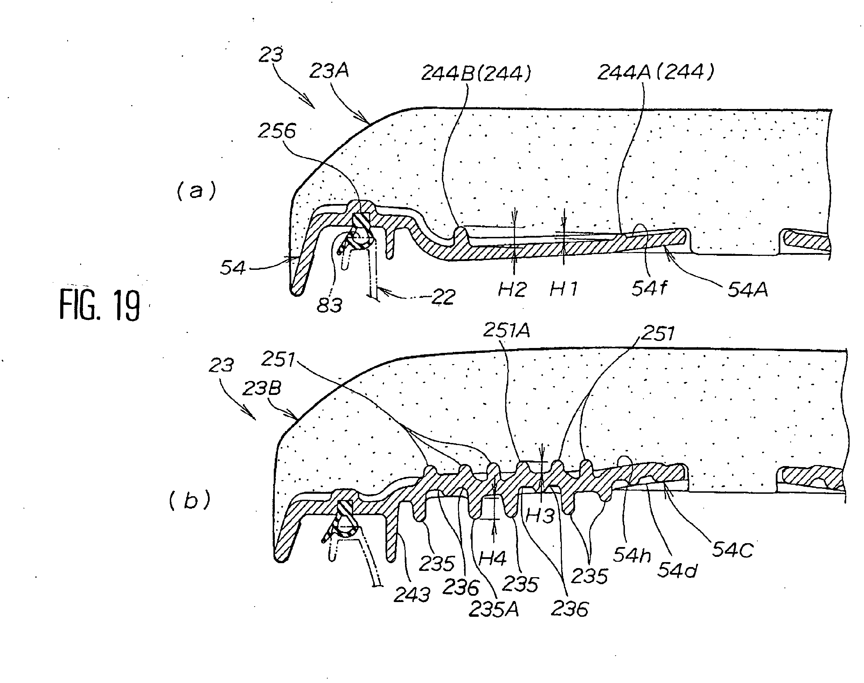

FIG. 19 is a cross section of a seat according to the invention.

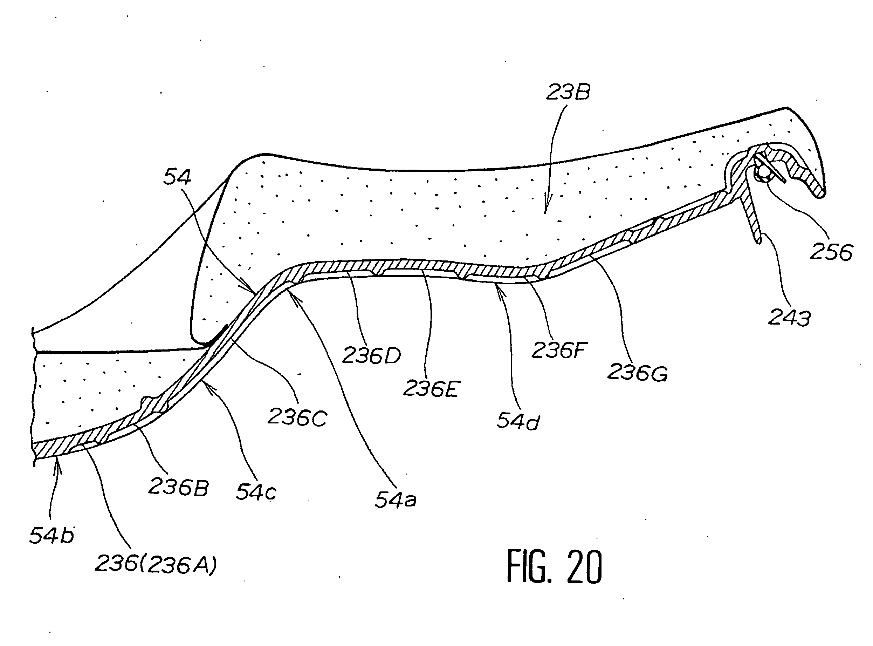

FIG. 20 is a cross section taken along line 20-20 of FIG. 17.

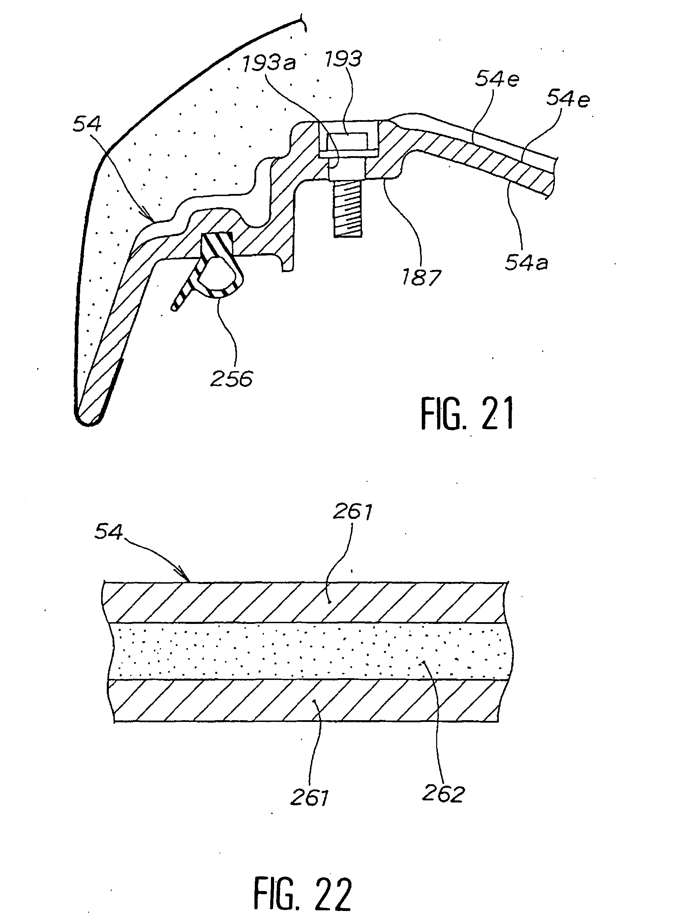

FIG. 21 is a cross section taken along line 21-21 of FIG. 17.
FIG. 22 is a cross section of the bottom plate according to the invention.

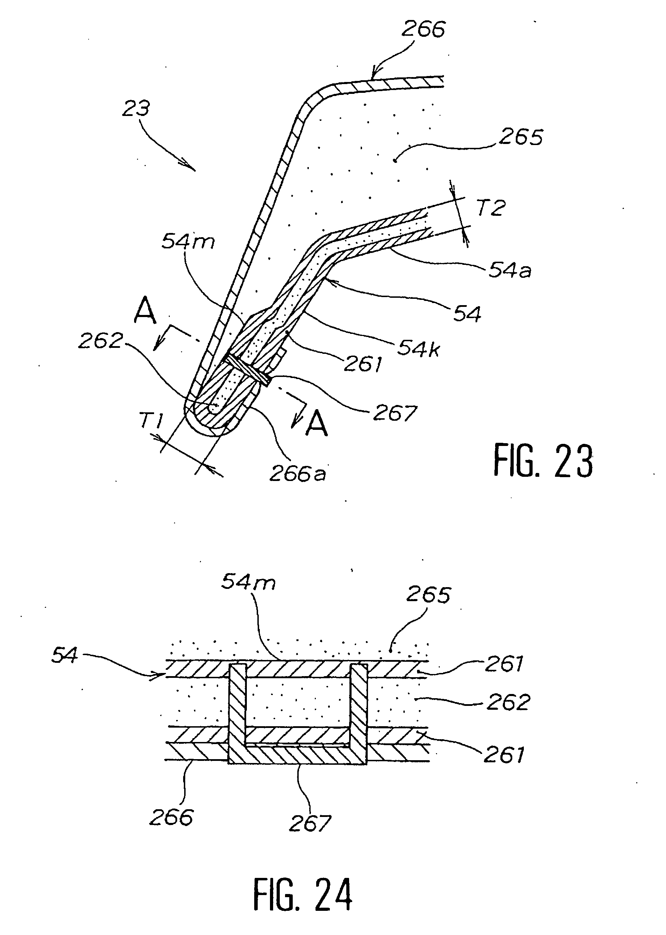

FIG. 23 is a cross section showing a peripheral part of the bottom plate according to the invention.
FIG. 24 is a cross section of a fixing needle penetrating the bottom plate according to the invention.

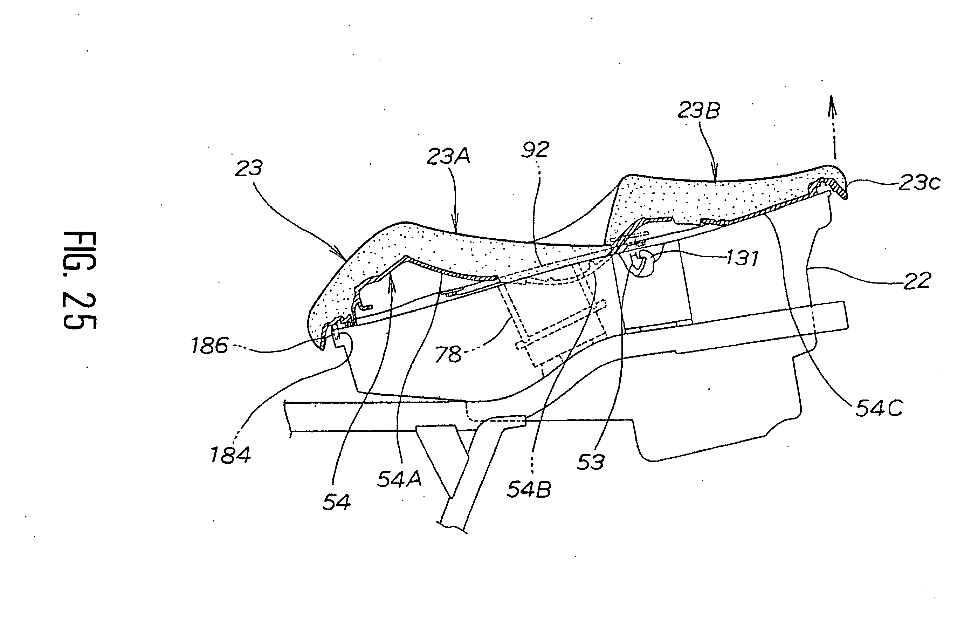

FIG. 25 is a cross section showing the action of the bottom plate according to the invention.
FIG. 26 is an exploded perspective view showing the seat structure of a conventional motorcycle (prior art 1).
FIG. 27 is a cross section showing the seat structure of a conventional motorcycle (prior art 2).
FIG. 28 is a bottom view of a conventional seat (prior art 2).
FIG. 29 is a bottom view showing another embodiment of the conventional seat (prior art 2).

### Mode for carrying out the Invention

An embodiment of the invention will be described hereinbelow with reference to the attached drawings. The drawings are to be seen in the direction of reference numerals.
FIG. 1 is a side view of a motorcycle according to the invention. A motorcycle 10 has a body frame 12 having a front end to which a head pipe 11 is attached, a handle shaft 13 rotatably attached to the head pipe 11, a front fork 14 attached to a lower portion of the handle shaft 13, a front wheel 16 attached to the lower end of the front fork 14, a handle 17 attached to the top of the handle shaft 13 for operating the front wheel 16, a front cover 18 for covering the handle shaft 13, the head pipe 11, and the front portion of the front fork 14, a front inner cover 21 attached on the rear side of the front cover 18, a luggage box 22 as a housing box attached in a rear upper portion of the body frame 12, a tandem seat 23 disposed so as to be opened/closed on the luggage box 22, a power unit 24 attached to a rear lower part of the body frame 12, and a rear wheel 26 attached to the rear end of the power unit 24.

31 denotes a front fender covering an upper part of the front wheel 16, 32 denotes a handle cover for covering a front part of the handle 17, 33 indicates a wind screen attached to the handle cover 32, 34 indicates a handle inner cover attached to a rear part of the handle cover 32, 36 indicates a back mirror, 37, 37 (only reference numeral 37 on this side is shown) indicates floor steps, 38, 38 (only reference numeral 38 on this side is shown) denote step supporting frames for supporting the floor steps 37, 37, 41, 42 denote an engine and a power transmitting mechanism constructing the power unit 24, 43 denotes a stand, 44 indicates a rear cushion unit extending between the rear end of the power unit 24 and the rear end of the body frame 12, 46 indicates a body cover, and 47 denotes a rear fender covering an upper part of the rear wheel 26.

The motorcycle 10 is characterized by the shape of the bottom plate of the tandem seat 23. By the shape, the rigidity of the tandem seat 23 is increased, the anti-theft effect is increased and, further, seat comfort of the tandem seat 23 is improved.

FIG. 2 is a side view of a main portion showing the rear part of the motorcycle according to the invention and illustrates a section of the tandem seat 23 with the body cover detached.
A seat hinge 51 for disposing the tandem seat 23 so as to be opened/closed on the luggage box 22 is attached to a rear frame 12A constructing the rear part of the body frame 12 and is disposed on the right side of the body of the luggage box 22 (on the innermost side of the luggage box 22 in the diagram). A seat catch 52 which locks the tandem seat 23 when the tandem seat 23 is closed, and engages with the tandem seat 23 side is attached to the rear frame 12A and is disposed on the left side of the body of the luggage box 22 (on this side of the luggage box 22 in the diagram).

A seat hook 53 which engages with the seat catch 52 is a member attached to a bottom plate 54 of the tandem seat 22.
The tandem seat 23 is constructed by a driver's seat 23A on which the driver sits down and an occupant's seat 23B on which an occupant sits down, which is formed at a level higher than the driver's seat 23A.

FIG. 3 is a plan view of the motorcycle according to the invention and shows that the rear frame 12A is constructed by a pair of a left frame 67 and a right frame 68, the seat catch 52 is attached to the left frame 67, and the seat hinge 51 is attached to the right frame 68. 71 denotes a cross pipe extending between the rear ends of the left and right frames 67 and 68, and 72, 72 denote steps for the occupant, which are foldably attached to the step supporting frames 38, 38 (refer to FIG. 1) and on which the occupant put his/her feet.

FIG. 4 is a perspective view showing an attaching state of a seat hinge according to the invention (the arrow ("front") in the diagram and the other diagrams expresses the front side of the body) and illustrates that the seat hinge 51 is attached to the right frame 68 of the rear frame 12A via a hinge bracket 74.

The seat hinge 51 is constructed by a body-side hinge 76 attached to the hinge bracket 74 and a seat-side hinge 78 swingably attached to the body-side hinge 76 via a hinge shaft 77. In a state where the tandem seat 23 (refer to FIG. 2) is closed, the seat-side hinge 78 constructed by a pipe is made stand, and the tandem seat 23 is attached to the upper end of the seat-side hinge 78. 81 and 82 denote notches formed in a flange 83 of the luggage box 22, through which the seat-side hinge 78 passes, and 84 denotes a stay attached to the seat-side hinge 78 for attaching a hinge cover (not shown) which will be described later.

FIG. 5 is a perspective view of the seat hinge according to the invention. The seat-side hinge 78 shown by an imaginary line shows a state where the tandem seat 23 (refer to FIG. 2) is closed. The seat-side hinge 78 shown by a solid line shows a state where the tandem seat is opened.

In the seat hinge 51, a stopper pin 85 as a stopper for fixing a seat position when the tandem seat is opened is movably attached to the body-side hinge 76, and an engagement piece 86 which comes into engagement with the stopper pin 85 is integrally attached to the seat-side hinge 78. 87 denotes a recessed portion formed in a front end part of the engagement piece 86. In the recessed portion 87, the stopper pin 85 side is fit.

The seat-side hinge 78 is constructed by a pair of J frames 91 and 91 extended in a J shape from the hinge shaft 77 side, a seat attaching pipe 92 attached to the tips of the J frames 91 and 91, and a seat attaching piece 93 attached to an almost center portion of the seat attaching pipe 92. 94 denotes a pipe extending between the J frames 91 and 91, and 96 and 96 denote reinforcement members.

The seat attaching pipe 92 has, at both ends, attaching ends 98 and 98 to be in contact with the bottom plate 54 (refer to FIG. 2) of the tandem seat and attaching holes 101 and 101 opened in the attaching ends 98 and 98 to be attached to the bottom plate 54 with bolts.
The seat attaching piece 93 is a part which comes into contact with the bottom plate 54 and has an attaching hole 102 for attachment to the bottom plate with a bolt.

FIG. 6 is a perspective view of a main portion of the seat hinge according to the invention and shows that elongated holes 106 are opened in side walls 104 and 105 of the body-side hinge 76 in the seat hinge 51, the stopper pin 85 is passed through the elongated holes 106 and 106, and an extension coil spring 107 is passed between the stopper pin 85 and the hinge shaft 77.

When the stopper pin 85 is fit in the recessed portion 87 of the engagement piece 86 via a collar 108 by the extension coil spring 107, the stopper pin 85 is pressed against the recessed portion 87 by resilient force of the extension coil spring 107 so that the stopper pin 85 does not easily come off from the recessed portion 87. That is, closing of the opened tandem seat 23 (refer to FIG. 2) is suppressed.

111 denotes a winding spring which generates a resilient force in the opening direction to lessen the operation force to open the tandem seat and is wound around the hinge shaft 77. A center part 112 of the winding spring 111 is in contact with the lower part of the pipe 94 of the seat-side hinge 78 and both ends 113 and 113 of the winding spring 111 are in contact with a bottom plate 114 of the body-side hinge 76.

Referring back to FIG. 2, the seat-side hinge 78 of the seat hinge 51, particularly, the seat attaching pipe 92 of the seat-side hinge 78 is attached to the bottom plate 54 so as to extend between the driver's seat 23A and the occupant's seat 23B. The connecting part between the driver's seat 23A and the occupant's seat 23B of the tandem seat 23 is a part in which the rigidity is the lowest in the tandem seat 23 since the bottom plate 54 is bent. By the seat attaching pipe 92, the tandem seat 23 can be reinforced.

FIGS. 7A and 7B are explanatory diagrams showing an inclination of the hinge shaft of the seat hinge according to the embodiment. FIGS. 7A and 7B are a side view and a plan view, respectively.
In FIG. 7A, the hinge shaft 77 is inclined so that, for example, its front side of an extension line 116 of the hinge shaft 77 is lower than a linear line 117 passing the attaching ends 98 and 98 of the seat-side hinge 78, and the angle formed by the extension line 116 and the linear line 117 is set to θ1.
In FIG. 7B, the extension line 116 of the hinge shaft 77 is inclined only by an angle θ2 from the linear line 118 extending in the longitudinal direction of the body so that the front part of the extension line 116 is positioned on the inner side of the body more than the rear part.

FIG. 8 is a perspective view showing an attaching state of the seat catch according to the invention and illustrates that the seat catch 52 is attached to the left frame 67 of the rear frame via catch brackets 121 and 122, a side face 123 of the luggage box 22 is recessed, and an upper part of the seat catch 52 is disposed below the flange 83 of the luggage box 22. 124 denotes a communication hole opened in the flange 83, through which the seat hook 53 passes when the seat hook 53 comes into engagement with the seat catch 52.

The seat hook 53 is a thin plate member, and the communication hole 124 is open in an elongated hole shape in the longitudinal direction of the flange 83. Consequently, the seat hook 53 is not projected to the inside of the luggage box 22 and the capacity of the luggage box 22 can be increased.

FIGS. 9A and 9B are diagrams for explaining the seat catch according to the invention. FIG. 9A is a side view showing an engaged state of the seat hook 53, and FIG. 9B is a side view showing a disengaged state of the seat hook 53.
In FIG. 9A, the seat catch 52 includes a flat almost-box-shaped housing 127, a locking nail 131 rotatably attached to the housing 127 by a pin 128, a stopper member 133 rotatably attached to the housing 127 by a pin 132 to regulate the rotation of the locking nail 131, and an extension coil spring 134 extended between the locking nail 131 and the stopper member 133.
The housing 127 is a member having a stopper piece 136 for regulating clockwise rotation of the locking nail 131.

The locking nail 131 has an upper nail 138 which engages with the seat hook 53, a lower nail 141 disposed apart from the upper nail 138, an L-shaped arm 142 whose tip comes into contact with the stopper piece 136 of the housing 127, and a spring attaching arm 143 to which one end of the extension coil spring 134 is attached.

The stopper member 133 is constructed by a side projecting part 146 having a tip which comes into contact with a step part 145 of the locking nail 131, thereby stopping rotation of the locking nail 131, and a lower arm 148 to which the enter end of the extension coil spring 134 is attached and the tip of a wire 147 is attached.
The wire 147 is coupled to a cylinder lock (not shown) for unlocking the tandem seat.

The action of the above-described seat catch 52 will be explained as follows.
In FIG. 9A, in a state where the tandem seat is closed and the seat hook 53 engages with the upper nail 138 of the locking nail 131, first, the cylinder lock coupled to the wire 147 is turned with a key to pull the wire 147 in the direction of arrow 1 as shown in FIG. 9B.

As a result, the stopper member 133 turns around the pin 132 as a center as shown by arrow 2 and the side projecting part 146 of the stopper member 133 comes off from the step 145 of the locking nail 131. Therefore, nothing restrains the rotation of the locking nail 131. The locking nail 131 turns as shown by arrow 3 by the resilient force of the extension coil spring 134, the upper nail 138 comes off from the seat hook 53, and the upper nail 138 and the seat hook 53 disengage from each other.

Since a force is applied in the direction of opening the tandem seat by the heat hinge, when the upper nail 138 and the seat hook 53 disengage from each other, as the tandem seat opens a little (pops up), the seat hook 53 rises as shown by arrow 4.

In the case of closing the tandem seat, first, in FIG. 9B, the tandem seat is pressed down to lower the seat hook 53 in the direction opposite to arrow 4, so that the seat hook 53 comes into contact with the lower nail 141 of the locking nail 131 and presses the lower nail 141 down. As a result, the locking nail 131 turns in the direction opposite to the arrow 3 and, by the resilient force of the extension coil spring 134, the tip of the side projecting part 146 of the stopper member 133 to which rotational force is applied in the direction opposite to the arrow 2 is retained by the step part 145 of the locking nail 131 as shown in FIG. 9A. Therefore, clockwise rotation of the locking nail 131 is regulated, so that the locking nail 131 and the seat hook 53 maintain the engaged state.

FIGS. 10A and 10B are cross sections for explaining the hinge cover of the seat hinge according to the invention. FIG. 10A is a cross section of the luggage box, seat hinge, tandem seat, body cover, and hinge cover. FIG. 10B is a cross section taken along line b-b of FIG. 10A.
FIG. 10A shows that a hinge cover 153 is attached to the seat hinge 51. With the hinge cover 153, a side portion of the seat hinge 51, specifically, a notch 154 formed in the body cover 46 is covered. 156 and 157 denote a bolt and a nut for attaching the bottom of the luggage box 22 to the hinge bracket 74. 158 and 161 denote a bolt and a nut for attaching the bottom of the luggage box 22 to a bracket 162 provided for the rear frame 12A. 163 and 164 denote a bolt and a nut for attaching the seat hinge 51 to the hinge bracket 74. 166 indicates a seal rubber for closing the gap between the luggage box 22 and the tandem seat 23.

The notch 154 is formed to allow large swing of the seat-side hinge 78 of the seat hinge 51 to the body side when the tandem seat 23 is opened. By providing the hinge shaft 77 of the seat hinge 51 on the outside and below an opening 168 of the luggage box 22 and providing the notch 154 in the body cover 46 on a side of the seat hinge 51, the tandem seat 23 can be largely opened, so that things can be easily put/taken in/from the luggage box 22. The whole opening 168 can be used as the luggage box 22, so that a wide thing and a larger number of things can be housed.

FIG. 10B shows that the notches 81 and 82 are provided in the flange 83 of the luggage box 22, and sponge rubbers 169 are attached to the notches 81 and 82. When the tandem seat is closed, the J frames 91 and 91 of the seat hinge come into contact with the notches 81 and 82 via the sponge rubbers 169.

FIGS. 11A and 11B are explanatory diagrams showing a notch in the body cover according to the invention. FIG. 11A is a perspective view and FIG. 11B is a cross section taken along line B-B of FIG. 11A.
In FIG. 11A, the notch 154 in the body cover 46 is a part whose whole periphery has a step 154a. Particularly, with a front-side step 154c and a rear-side step 154d in the step 154a, the inner face of the hinge cover 153 (refer to FIG. 10A) comes into contact.

In FIG. 11B, each of the front-side step 154c and the rear-side step 154d is a part having a V shape in cross section and whose center is dent. By making upper projections 172 and 172 (which will be described in detail with reference to FIG. 13) and lower projections 173 and 173 (not shown, which will be described in detail with reference to FIG. 13) which are projected from the inner face of the body cover 46 come into contact with the front-side and rear-side steps 154c and 154d, the hinge cover 153 (refer to FIG. 10A) is centered. The sectional shape of each of the front-side and rear-side steps 154c and 154d is not limited to the V shape but may be a U shape.

By providing the front-side and rear-side steps 154c and 154d in the periphery of the notch 154, centering of the hinge cover 153 in the longitudinal direction of the body can be performed, and precision of positioning of the hinge cover 153 to the body cover 46 can be improved.

The action of the above-described seat hinge 51 and hinge cover 153 will now be described.
FIGS. 12A to 12C are action diagrams for explaining an opening operation of the hinge cover according to the invention. FIG. 12A is a cross section showing a state where the hinge cover 153 is closed, FIG. 12B is a cross section showing a state where the hinge cover 153 is slightly open, and FIG. 12C is a cross section showing a state where the hinge cover 153 is largely open.
In FIG. 12A, the hinge cover 153 is a member attached to the stay 84 of the seat-side hinge 78 via a U-shaped spring 171 as a resilient material having an almost U shape. The hinge cover 153 has a pair of upper projections 172 and 172 provided in an upper part of the inner face (only one of the upper projections 172 and 172 is shown), a pair of lower projections 173 and 173 provided in a lower part of the inner face (only one of the lower projections 173 and 173 is shown), and a sideward extending part 174 extended sideward from a portion between the upper projections 172 and 172 and the lower projections 173 and 173 in order to attach the U-shaped spring 171. 176 and 177 denote a screw and a nut for attaching the U-shaped spring 171 to the stay 84, and "d" indicates a spacing between the hinge cover 153 and the body cover 46.

FIG. 12A shows a state where the upper projections 172 and 172 and the lower projections 173 and 173 of the hinge cover 153 are in contact with the periphery of the notch 154 of the body cover 46, specifically, the front-side step 154c (refer to FIG. 11A) and the rear-side step 154d (refer to FIG. 11A). At this time, the U-shaped spring 171 is in a deflected state by opening two ends of the U shape. By a resilient force generated by the deflection, the hinge cover 153 is pressed against the periphery of the notch 154.

In FIG. 12B, since the spacing "d" (refer to FIG. 12A) between the hinge cover 153 and the body cover 46 is set so as to increase from the upper part to the lower part, after starting opening of the tandem seat 23, when the seat-side hinge 78 of the seat hinge 51 slightly swings from a position of an imaginary line to a position of a solid line, deflection of the U-shaped spring 171 decreases and the resilient force decreases. While the upper projections 172 and 172 of the hinge cover 153 remain pressed against the periphery of the notch 154, the lower part of the hinge cover 153 is slightly opened as shown by an arrow around the contact part between the periphery of the notch 154 and the upper projections 172 and 172 as a center, and the lower projections 173 and 173 move apart from the periphery of the notch 154.

In FIG. 12C, when the seat-side hinge 78 swings further, the U-shaped spring 171 hardly deflects. Since the hinge cover 153 swings together with the seat-side hinge 78, the upper projections 172 and 172 and the lower projections 173 and 173 move away from the periphery of the notch 154.

The spacing between the hinge cover 153 and the body cover 46 in the lower part is set to be larger than that in the upper part and the hinge cover 153 moves away from the periphery of the notch 154 from the lower projections 173 and 173, thereby enabling the hinge cover 153 to be moved so that the lower part of the hinge cover 153 does not interfere with a cover step 181 formed in the body cover 46, which is provided to make the surface of the body cover 46 and the surface of the hinge cover 153 flush with each other.

FIG. 13 is a perspective view of the luggage box according to the invention and shows that a recess 184 is integrally formed in the front part of the flange 83 of the luggage box 22.

The recess 184 is a part which comes into engagement with a tandem-seat-side projection to be described later and prevents straining opening/closing of the tandem seat, more specifically, the front part of the tandem seat.

FIG. 14 is a bottom view showing the bottom surface of the tandem seat according to the invention, and illustrates that a projection 186 as a stopper projecting to the inner side of the vehicle width direction is integrally formed in the front part of the bottom plate 54 of the tandem seat 23. 187 and 188 denote seat-side attaching parts with which the attaching ends 98 and 98 (refer to FIG. 5) of the seat hinge 51 come into contact in order to attach the seat hinge 51. 191 denotes a seat-side attaching part with which the seat attaching piece 93 (refer to FIG. 5) of the seat hinge 51 comes into contact in order to attach the seat hinge 51. 193... ("..." denotes plurality) denotes fixing bolts for attaching the tandem seat 23 to the seat hinge 51. 194 denotes a hook fixing part for fixing the seat hook 53. 196 and 196 denote fixing bolts for fixing the seat hook 53 to the tandem seat 23. Ribs formed on an under face 54a of the bottom plate 54 are not shown in the diagram but will be described in detail with reference to FIG. 17.

FIGS. 15A and 15B are cross sections for explaining engagement between the luggage box and the tandem seat according to the invention. FIG. 15A is a cross section showing the engagement state, and FIG. 15B is a cross section showing an action of closing the tandem seat.
In FIG. 15A, the recess 184 of the luggage box 22 has an inclined surface 184A for receiving a projection 186 of the tandem seat 23.
The projection 186 of the tandem seat 23 has an engagement surface 186A having an arc shape which comes under the inclined surface 184A.

200 in the diagram denotes a rotation center point which is the center of the arc of the engagement surface 186A and also the rotation center of the engagement surface 186A. The rotation center point 200 is a point at which the extension line 116 of the hinge shaft 77 shown in FIGS. 7A and 7B crosses a plane parallel to the drawing sheet surface passing an engagement part 201 which is an engagement part between the recess 184 of the luggage box 22 and the projection 186 of the tandem seat 23.

As shown in FIGS. 7A and 7B, in the invention, the hinge shaft 77 of the seat hinge 51 is inclined so that its front side is lowered in side view and the front part of the hinge shaft 77 is positioned on the inner side of the vehicle more than the rear part in plan view, thereby making the rotation center point 200 disposed below the engagement part 201 in FIG. 15A.
The action of the above-described engagement between the recess 184 of the luggage box 22 and the projection 186 of the tandem seat 23 will now be described.

In FIG. 15B, when the tandem seat 23 in an open state is gradually closed, the tandem seat 23 turns around the rotation center point 200 as a center and, in association with the turn, the engagement surface 186A of the projection 186 comes under the inclined surface 184A of the recess 184 in the luggage box 22, and the projection 186 comes into engagement with the recess 184 as shown in FIG. 15A. In this state, for example, even if someone tries to forcefully open the front part of the tandem seat 23, it can be checked by the engagement part 201.

Referring again to FIG. 15A, for example, when a rotation center point 200A of the projection 186 is set just below the engagement part 201, a moment which turns the tandem seat 23 around the rotation center point 200A is not generated when someone applies an upward force to forcefully open the front part of the tandem seat 23. Since the rotation center point 200 is a point closer to the rotation center point 200A, the moment which turns the tandem seat 23 can be reduced, and the projection 186 can firmly engage with the recess 184 in the engagement part 201.

200B in the diagram indicates a rotation center point arranged on a side of the opening 168 of the luggage box 22 in front view so that the hinge shaft is not inclined forward but the front part of the hinge shaft is positioned on the inner side of the body more than the rear part.

Even when the tandem seat 23 is closed around the rotation center point 200B as a center, the projection provided on the tandem seat 23 side moves only almost in the vertical direction and cannot come into engagement with the recess formed in the luggage box side.

Although the recess 184 is formed in the front part of the flange 83 of the luggage box 22 in FIG. 13, the invention is not limited to the case. It is also possible to form a recess in the flange 83 in a side part of the luggage box 22 and allow the recess to come into engagement with the projection provided on the tandem seat 23 side. Alternately, it is also possible to provide a recess on the tandem seat 23 side and provide a projection on the luggage box 22 side.

FIG. 16 is a cross section of the tandem seat according to the invention. The bottom plate 54 of the tandem seat 23 is a member provided so as to cover the lower part of each of the driver's seat 23A and the occupant's seat 23B and is constructed by: a bottom plate front part 54A as a bottom of the driver's seat 23A; a bottom plate intermediate part 54B extended from the bottom plate front part 54A obliquely upward to the rear side; and a bottom-plate rear part 54C extended rearward from the bottom plate intermediate part 54B as the bottom of the occupant's seat 23B (as guidelines of boundaries of the bottom-plate front part 54A, bottom-plate intermediate part 54B, and bottom-plate rear part 54C, curves C1 and C2 are shown in FIG. 17). By setting the density of ribs on the bottom plate 54 on the rear side to be higher than that on the front side, the weight is reduced and the rigidity of the occupant's seat 23B as the rear-side seat is improved. Since the density of ribs on the front side of the bottom plate 54 is lower than that on the rear side, roughness-free seat comfort can be obtained.

FIG. 17 is a bottom view of the tandem seat according to the invention. The under face 54a of the bottom plate 54 is constructed by: a front-part under face 54b as an under face of the bottom plate front part 54A; an intermediate-part under face 54c as an under face of the bottom plate intermediate part; and a rear-part under face 54d as an under face of the bottom plate rear part 54C. Under-face vertical ribs 235 ... (shown by thick lines) are formed so as to extend in the longitudinal direction from the rear end of the intermediate-part under face 54c to the rear-part under face 54d, and dents 236 ...are formed so as to be arranged in the longitudinal direction from the rear end of the front-part under face 54b to the rear-part under face 54d via the intermediate-part under face 54c (although the dents 236 ... of various sizes are included, the same reference numeral is given). 237, 237, and 238 denote hooks for retaining a maintenance manual, 241 and 241 denote horizontal shift preventing projections for preventing a horizontal shift of the maintenance manual, and 242 and 243 denote peripheral ribs which are provided almost annularly near the periphery of the bottom plate 54.

The under-face vertical ribs 235 are mainly parts for increasing flexural rigidity in the longitudinal direction of the rear-part under face 54d of the bottom plate 54. By the under-face vertical ribs 235 ..., the rigidity of the occupant's seat 23B can be increased.

FIG. 18 is a plan view of the bottom plate according to the invention and illustrates that a top face 54e of the bottom plate 54 is constructed by a front-part top face 54f as the top face of the bottom-plate front-part 54A, an intermediate-part top face 54g as the top face of the bottom-plate intermediate-part 54B, and a rear-part top face 54h as the top face of the bottom-plate rear-part 54C. On the front-part top face 54f, front-part top-face vertical ribs 244 ... and front-part top-face horizontal ribs 245 are formed in a lattice shape. On the intermediate-part top-face 54g, a curved front rib 246 and a curved rear rib 247 which are curved so as to be bent rearward are formed. On the rear-part top-face 54h, rear-part top-face vertical ribs 251 ..., and rear-part top-face sub vertical ribs 252 ... and rear-part top-face sub horizontal ribs 253 ... which are in a lattice shape are formed.

As described above, on the top face 54e of the bottom plate 54, the front-part top-face vertical ribs 244 ... and the front-face top-face horizontal ribs 245 ... are formed on the front-part top face 54f. The rear-part top-face vertical ribs 251...and the lattice-shaped rear-part top-face sub vertical ribs 252 and rear-part top-face sub horizontal ribs 253 are formed on the rear-part top face 54h. The rear-part top-face vertical ribs 251... and the lattice-shaped rear-part top-face sub vertical ribs 252 ... and rear-part top-face sub horizontal ribs 253 are provided at a density higher than that of the front-part top-face vertical ribs 244 ... and the front-part top-face horizontal ribs 245 .... Thus, the rigidity of the bottom-plate rear part 54C can be increased, seat comfort of the driver's seat 23A can be achieved and, in addition, increase in weight and cost can be suppressed.

On the bottom-plate rear-part 54C, by forming the rear-part top-face vertical ribs 251 ... and the lattice-shaped rear-part top-face sub vertical ribs 252 ... and rear-part top-face sub horizontal ribs 253 ... in addition to the under-face vertical ribs 235 ... (refer to FIG. 17) of the under face 54a, the rigidity of the occupant's seat 23B is increased further.

FIGS. 19A and 19B are cross sections of the seat according to the invention. FIG. 19A is a cross section taken along line a-a of FIG. 16. FIG. 19B is a cross section taken along line b-b of FIG. 16.
In FIG. 19A, the bottom-plate front-part 54A has the front-part top-face vertical ribs 244 on the front-part top face 54f.
For convenience of explanation, the front-part top-face vertical ribs are described as the front-part top-face vertical rib 244A and the front-part top-face vertical rib 244B so as to be discriminated from each other. The front-part top-face vertical rib 244A on the center side in the vehicle width direction (the horizontal direction of the diagram) is a part of which height H1 is lower than the height H2 of the front-part top-face vertical rib 244B on the end side in the vehicle width direction. By making the rigidity of the center portion of the front-part bottom plate 54A lower than that on the end side, the rigidity is set to gradually increase from the center portion to the end side.

256 denotes a seal rubber attached on the inner side of the periphery of the bottom plate 54 so as to close the gap between the flange 83 of the luggage box 22 and the bottom plate 54 when the tandem seat 23 is closed.

In FIG. 19B, the bottom-plate rear-part 54C has the under-face vertical ribs 235 ... on the rear-part under face 54d and has the rear-part top-face vertical ribs 251 ... on the rear-part top face 54h. The under-face vertical ribs 235 ... and the rear-part top-face vertical ribs 251 ... are offset from each other in the vehicle width direction. When one of the rear-part top-face vertical ribs 251 is set as a rear-part top-face vertical rib 251A having height H3, and one of the under-face vertical ribs 235 is set as an under-face vertical rib 235A having height H4, by making the height H3 smaller than the height H4, seat comfort of the occupant's seat 23B can be obtained or so-called roughness can be suppressed.

FIG. 20 is a cross section taken along line 20-20 of FIG. 17 and illustrates that the dents 236 ... are provided in the rear end of the front-part under face 54b of the bottom plate 54, the intermediate-part under face 54c, and the rear-part under face 54d. For convenience of explanation, the dents are called as 236A, 236B, 236C, 236D, 236E, 236F, and 236G in order from the front-part under face 54b to the rear-part under face 54d. In the intermediate-part under face 54c, the dent 236C is formed so as to be long in the longitudinal direction to facilitate formation of the bottom plate 54 with a die. In the rear-part under face 54d, the lengths of the dents 236D to 236G are set to the same in order to make the rigidity in the longitudinal direction of the occupant's seat 23B (horizontal direction of the drawing) constant.
The dents 236A to 236G are provided to reduce the weight of the bottom plate 54 while suppressing deterioration of rigidity of the bottom plate 54 as much as possible.

FIG. 21 is a cross section taken along line 21-21 of FIG. 17 and shows a state where the fixing bolt 193 for fixing the heat hinge is fixed to the bottom plate 54.
The fixing bolt 193 is press fit in a fixing hole 193a from the top face 54e side of the bottom plate 54 and is fixed so as not to rotate before the tandem seat is assembled. The fixing bolt 196 shown in FIG. 14 is similarly fixed to the bottom plate 54.

FIG. 22 is a cross section of the bottom plate according to the invention. The bottom plate 54 is a member molded by injection molding with a foaming molding material, that is, a foaming resin material and is constructed by surface layers 261 and 261 and a core layer 262 formed on the inside of the surface layers 261 and 261 (in the cross section before FIG. 21, the core layer 262 is not shown).
The surface layer 261 hardly includes air bubbles, and the core layer 262 includes a number of air bubbles.

The bottom plate 54 is molded by injecting the foaming resin material into the cavity of an injection molding die and decreasing the pressure in the cavity or increasing the capacity of the cavity by moving a movable die in a state where the surface portion of the foaming resin material is solidified and the inner portion is not solidified, thereby foaming the unsolidified inner portion of the foaming resin material.

The foaming resin material is obtained by adding a foaming agent (for example, sodium hydrogencarbonate) to a thermoplastic resin (for example, polypropylene).
By forming the bottom plate 54 of the foaming resin material, the thickness of the bottom plate 54 can be increased, the rigidity of the bottom plate 54 can be easily improved and, moreover, light weight can be achieved.

FIG. 23 is a cross section of the peripheral part of the bottom plate according to the invention and illustrates that the tandem seat 23 is constructed by the bottom plate 54, a cushion material 265 mounted on the bottom plate 54, and a surface material 266 covering the outside of the cushion material 265, and a peripheral part 266a of the surface material 266 is fixed to the under face 54 of a thick part 54m provided in a peripheral part 54k of the bottom plate 54 with fixing needles 267 ...
The thick part 54m is a part having a thickness which is at least 1.4 times as thick as that of the other portion of the bottom plate 54. That is, when the thickness of the thick part 54m is set as T1 and the thickness of the other part of the bottom plate 54 is T2, T1 ≥ 1.4× T2 is satisfied.

FIG. 24 is a cross section of a fixing needle driven in the bottom plate according to the invention (corresponding to the cross section taken along line A-A of FIG. 23) and shows that the fixing needle 267 having a U shape in cross section is driven in the thick part 54m to fix the surface material 266 to the thick part 54m.
By making the peripheral part 54k of the bottom plate 54 thick as described above, the fixing needle 267 can be suppressed from easily coming off. Thus, the quality of the tandem seat 23 can be increased.

The action of the above-described bottom plate 54 will now be explained.
FIG. 25 is a cross section showing the action of the bottom plate according to the invention. In the bottom plate 54, the ribs on the top face on the driver's seat 23A side are arranged at intervals wider than the ribs on the top face on the occupant's seat 23B side. Ribs are provided also on the under face of the occupant's seat 23B side. The luggage box 22 and the tandem seat 23 are coupled to each other in the front end part (the recess 184 and the projection 186) and the center part (the locking nail 131 and the seat hook 53). The seat attaching pipe 92 of the seat-side hinge 78 is attached to the bottom plate 54 so as to extend between the driver's seat 23A and the occupant's seat 23B.

As a result, by disposing ribs of the bottom-plate rear part 54C more densely than those of the bottom-plate front part 54A, reduction in weight and improved rigidity of the occupant's seat 23B are achieved. Since the number of ribs in the front part of the driver's seat 23A is small, seat comfort can be improved. In addition, by connecting the front and rear parts of the driver's seat 23A to the luggage box 22, anti-theft effect can be increased. By increasing the rigidity of the rear-part bottom plate 54C of the occupant's seat 23B, for example, the rear end 23c of the occupant's seat 23B can be prevented from being forcefully opened upward with a hand as shown by an arrow. Therefore, the effect of preventing things housed in the luggage box 22 from being stolen can be increased.

Further, as described above, the bottom-plate intermediate part 54B corresponding to the coupling part between the driver's seat 23A and the occupant's seat 23B can be reinforced by the seat attaching pipe 92.

As described with reference to FIGS. 2 and 18, in the motorcycle 10 (refer to FIG. 1) in which the bottom plate 54 of the tandem seat 23 obtained by coupling the driver's seat 23A and the occupant's seat 23B in the longitudinal direction is made of a foam molding material or a forming resin material, the rear-part top-face vertical ribs 251 of the bottom-plate rear-part 54C on the occupant's seat 23B side are disposed more densely than the front-part top-face vertical ribs 244 and the front-part top-face horizontal ribs 245 of the bottom-plate front part 54A on the driver's seat 23A.

Since the bottom plate 54 is made of a foam molding material, light weight can be achieved. In addition, by disposing the rear-part top-face vertical ribs 251 of the bottom-plate rear-part 54C on the occupant's seat 23B side more densely than the front-part top-face vertical ribs 244 and the front-part top-face horizontal ribs 245 of the bottom-plate front part 54A on the driver's seat 23A, rigidity of the bottom-plate rear-part 54C on the occupant's seat 23B side can be increased. Consequently, the occupant's seat 23B can be prevented from being forcefully opened, and the anti-theft effect can be increased.
Further, since the driver's seat 23A has a smaller number of the front-part top-face vertical ribs 244 and the front-part top-face horizontal ribs 245, seat comfort can be improved more, and increase in weight can be suppressed.

When the anti-theft effect of the occupant's seat 23B increases, it is unnecessary to provide a conventional seat locking mechanism in the seat rear part. As the seat locking mechanism, one set of the seat catch 52 and the seat hook 53 is sufficient, so that cost reduction can be realized.

The seat hinge 51 for attaching the tandem seat 23 so as to be opened/closed to the luggage box 22 disposed below the tandem seat 23 is provided on one of right and left sides of the bottom plate 54, and the seat hook 53 which comes into engagement with the seat catch 52 provided on the luggage box 22 side is provided on the other side of the bottom plate 54.

Even when only one set of the seat hinge 51, the seat catch 52 and the seat hook 53 is disposed in an almost center portion in the overall length of the tandem seat 23, because of high rigidity of the occupant's seat 23B, the rear part of the tandem seat 23 can be prevented from being forcefully opened, and the anti-theft effect can be increased.

The projection 186 which comes into engagement with the recess 184 provided in the luggage box 22 in the state where the tandem seat 23 is closed, thereby preventing the tandem seat 23 from being opened is provided in the front part of the bottom plate 54.
By providing the projection 186 in the front part of the bottom plate 54, in addition to the rear part of the tandem seat 23, the anti-theft effect of the front part of the tandem seat 23 can be increased.

The height and overall length of the ribs formed on the bottom plate of the invention, and an interval between neighboring ribs can be properly changed. Although the rib has a linear shape, the invention is not limited to the shape. A rib having a curved-shape may be also formed.

### Effects of the Invention

With the configuration, the invention displays the following effects.
In the structure of the seat of the motorcycle of claim 1, ribs on the bottom plate on the occupant's seat side are disposed more densely than ribs on the bottom plate on the driver's seat side, in addition to reduction light realized by foam-molding of the bottom plate, rigidity of the bottom plate on the occupant's seat side can be increased. Consequently, the occupant' s seat can be prevented from being forcefully opened, and the anti-theft effect can be increased.
Further, since the driver's seat has a smaller number of the ribs, seat comfort can be improved more, and increase in weight of the tandem seat can be suppressed.

When the anti-theft effect of the occupant's seat increases, it is unnecessary to provide a conventional seat locking mechanism in the seat rear part. One seat locking mechanism is sufficient, so that cost reduction can be realized.

In the structure of the seat of the motorcycle of claim 2, a seat hinge for attaching the tandem seat so as to be opened/closed to a housing box disposed below the tandem seat is provided on one of right and left sides of the bottom plate, and a seat hook which comes into engagement with a seat catch provided on the housing box side is provided on the other side of the bottom plate. Consequently, even when only one set of the seat hinge, the seat catch and the seat hook is disposed in an almost center portion in the overall length of the tandem seat, because of high rigidity of the occupant's seat, the rear part of the tandem seat can be prevented from being forcefully opened, and the anti-theft effect can be increased.

In the structure of the seat of the motorcycle of claim 3, the bottom plate has, in its front part, a stopper for preventing the tandem seat from opening by coming into engagement with a recess provided in the housing box in a state where the tandem seat is closed. Therefore, in addition to the rear part of the tandem seat, the anti-theft effect of the front part of the tandem seat can be increased.

## Claims

1. A structure of a seat of a motorcycle in which a foam molding material is used for a bottom plate (54) of a tandem seat (23) obtained by coupling a driver' s seat (23A) and an occupant's seat (23B) to each other in the longitudinal direction,
**characterized in that** ribs (251) on the bottom plate on said occupant's seat side are disposed more densely than ribs (244) on the bottom plate on said driver's seat side.

2. The structure of a seat of a motorcycle according to claim 1, **characterized in that** a seat hinge (51) for attaching the tandem seat (23) so as to be opened/closed to a housing box (22) disposed below said tandem seat (23) is provided on one of right and left sides of said bottom plate (54), and a seat hook (53) which comes into engagement with a seat catch (52) provided for the housing box (22) side is provided on the other sides of the bottom plate (54).

3. The structure of a seat of a motorcycle according to claim 1 or 2, **characterized in that** said bottom plate has, in its front part, a stopper (186) for preventing the tandem seat (23) from opening by coming into engagement with a recess (184) provided in said housing box (22) in a state where said tandem seat (23) is closed.

## Patentansprüche

1. Struktur eines Sitzes von einem Motorrad, in welchem ein Schaumstoff-Formmaterial für eine Bodenplatte (54) eines Tandemsitzes (23) verwendet wird, der durch Kopplung eines Fahrersitzes (23A) und eines Fahrgastsitzes (23B) in der Längsrichtung zueinader erhalten ist, **dadurch gekennzeichnet, dass**
Rippen (251) auf der Bodenplatte an der Fahrgastsitzseite dichter als Rippen (244) auf der Bodenplatte an der Fahrersitzseite angeordnet sind.

2. Struktur eines Sitzes von einem Motorrad nach Anspruch 1, **dadurch gekennzeichnet, dass** ein Sitzgelenk (51) zum Anbringen des Tandemsitzes (23) an einem Gehäusebehälter (22), der unter dem Tandemsitz (23) angeordnet ist, an einer rechten oder linken Seite der Bodenplatte (54) vorgesehen ist, um geöffnet/geschlossen zu werden, und ein Sitzhaken (53) an der anderen Seite der Bodenplatte (54) vorgesehen ist, welcher in Eingriff mit einer Sitzarretierung (52) kommt, die an der Seite des Gehäusebehälters (22) vorgesehen ist.

3. Struktur eines Sitzes von einem Motorrad nach Anspruch 1 oder 2, **dadurch gekennzeichnet, dass** die Bodenplatte in ihrem vorderen Teil einen Anschlag (186) zum Verhindern des Öffnens des Tandemsitzes (23) hat, der in einem Zustand, in dem der Tandemsitz (23) geschlossen ist, in Eingriff mit einer Vertiefung (184) gelangt, die an dem Gehäusebehälter (22) vorgesehen ist.

## Revendications

1. Structure d'une selle de motocyclette dans laquelle un matériau de moulage de mousse est utilisé pour une plaque inférieure (54) d'une selle tandem (23) obtenue en couplant la selle d'un conducteur (23A) et la selle d'un occupant (23B) l'une à l'autre dans la direction longitudinale,
**caractérisée en ce que** des nervures (251) sur la plaque inférieure sur ledit côté de siège de l'occupant sont disposées plus densément que les nervures (244) sur la plaque inférieure sur ledit côté de siège du conducteur.

2. Structure d'une selle d'une motocyclette selon la revendication 1, **caractérisée en ce qu'**une articulation de selle (51) destinée à fixer la selle tandem (23) de manière à être ouverte/fermée sur une boîte de logement (22) disposée sous ladite selle tandem (23) est prévue sur un des côtés droit et gauche de ladite plaque inférieure (54), et un crochet de selle (53) qui vient en prise avec un cliquet de selle (52) prévu pour le côté de la boîte de logement (22) est prévu sur l'autre côté de la plaque inférieure (54).

3. Structure d'une selle d'une motocyclette selon la revendication 1 ou 2, **caractérisée en ce que** ladite plaque inférieure présente, dans sa partie avant, une butée (186) destinée à empêcher la selle tandem (23) de s'ouvrir en venant en prise avec un évidement (184) prévu dans ladite boite de logement (22) dans un état dans lequel ladite selle tandem (23) est fermée.
